# EUROPEAN PATENT APPLICATION

(11) **EP 2 020 640 A1**
(43) Date of publication of application: **04.02.2009**
(21) Application number: 08075673.7
(22) Date of filing: 30.07.2008
(51) Int. Cl.: G06F 21/20

(54) **Secure data storage device and method of storing and retrieving user data**

(30) Priority: 31.07.2007 NL 1034214
(71) Applicant: RiTech International Limited, Siu Lek Yuen, New Territories (HK)
(72) Inventor: Lim, Boon Lum, Siu Lek Yuen, New Territories (HK)
(74) Representative: Mertens, Hans Victor

(57) **Abstract**

In a portable and secure data storage device 100, access may be gained to a user memory by scanning at least two different fingerprints with a fingerprint scanner 12. In an enrolment mode of the data storage device, at least two different administrator fingerprints from at least one administrator are scanned and enrolled. In a further enrolment mode of the data storage device, at least two different user fingerprints from at least one user are scanned and enrolled. In a normal operation mode of the data storage device, at least two different fingerprints are scanned and verified against the enrolled administrator fingerprints and the enrolled user fingerprints, and access is gained to the data storage device for storing user data and/or retrieving user data if the verification of each of the different fingerprints is successful.

## Description

The present invention relates to a secure data storage device, in particular, a data storage device which uses biometric (fingerprint) technologies to ensure that data and information storage within the device is secured with personal biometrics information. The storage device may be portable, and may act as a hard disk which can be connected to any host computer system, e.g. by a computer serial bus interface. The user can then access, store and retrieve data stored in the storage device. As the data in the device is protected by fingerprint technology, only one or more persons with previously enrolled fingerprints can activate the function of the storage device.

US 6,125,192 discloses a fingerprint sensor that is connected to a digital system such that access of the digital system requires fingerprint authentication. Similarly, US 6,353,472 discloses a device for the authentication of a person by his fingerprints prior to an authorization for an operation.

Using fingerprints as a way of securing access to a data storage device may present a problem when a fingerprint pattern on a person's finger has been damaged by any cause, making the damaged fingerprint pattern unverifiable, and consequently the data storage device cannot be accessed.

It is therefore desirable to provide a data storage device which is more versatile in use, while at the same time providing a high level of security against unauthorized access to user data stored in the data storage device.

In an embodiment of the present invention, a method storing and/or retrieving user data in a secure data storage device is provided. The method comprises:
- enrolling administrator fingerprints by:
   - in an enrolment mode of the data storage device, scanning M different administrator fingerprints from at least one administrator (M ≥ 2);
   - generating administrator fingerprint bio-data from the scanned administrator fingerprints; and
   - storing the administrator fingerprint bio-data to enrol the administrator fingerprints,
- accessing the data storage device by:
   - in a normal operation mode of the data storage device, scanning P different fingerprints (2 ≤ P ≤ M);
   - verifying each of the P fingerprints against the enrolled administrator fingerprints;
   - if the verification of each of the P fingerprints is successful:
- storing the user data by:
   - receiving the user data; and
   - storing the user data in the data storage device, and/or
- retrieving the user data by:
   - reading the user data in the data storage device; and
   - outputting the user data from the data storage device.

In this method, an administrator may be a person coordinating the use of the data storage device by one or more users, or an administrator may be a user himself or herself. Instead of one administrator, more than one administrator may be involved in the use of the data storage device.

In the enrolment of administrator fingerprints, at least two different administrator fingerprints are taken. These at least two fingerprints may originate from the same person or from different persons. The requirement of at least two fingerprints increases the level of security of the data storage device in subsequent use thereof, and at the same time may make the data storage device less vulnerable to inadvertent damage of an administrator's enrolled fingerprint pattern (such that this fingerprint cannot be verified) in the use of the device.

In use of the data storage device (normal operation mode), the number of administrator fingerprints required to access the device (P) may be chosen lower than the number of enrolled administrator fingerprints (M), so that inadvertent damage of an administrator's enrolled fingerprint pattern need not entail an inaccessibility of the data storage device, since other administrator fingerprints may be used.

After successful verification of the P administrator fingerprints, user data may be written to, or retrieved from the data storage device. Before storing the user data in the data storage device, the user data may be encrypted, and the encrypted user data may then be stored. Similarly, before retrieving the user data from the data storage device, encrypted user data may be decrypted, and the decrypted user data may then be output from the data storage device.

In a further embodiment of the present invention, the method of storing and/or retrieving user data further comprises:
- enrolling user fingerprints by:
   - in an enrolment mode of the data storage device, scanning N different user fingerprints from at least one user (N ≥ 2);
   - generating user fingerprint bio-data from the scanned user fingerprints; and
   - storing the user fingerprint bio-data to enrol the user fingerprints,
wherein, in accessing the data storage device, each of the P fingerprints is verified against the enrolled administrator fingerprints and the enrolled user fingerprints (2 ≤ P ≤ M+N).

According to this embodiment, any combination of administrator fingerprints and user fingerprints totalling P fingerprints may be used, if verified successfully, to access the data storage device, where the P fingerprints may contain zero administrator fingerprints to P administrator fingerprints, and any number of administrator fingerprints between zero and P, and the remaining number of the P fingerprints may contain zero user fingerprints (when the number of administrator fingerprints is P) to P user fingerprints (when the number of administrator fingerprints is zero), and any number of user fingerprints between zero and P (where the remaining number of the P fingerprints is added up to P by administrator fingerprints).

When administrators and/or users of the data storage device change, the enrolled fingerprints may be reset (deleted) depending on the availability of administrator fingerprints or the availability of both administrator fingerprints and user fingerprints.

If only administrator fingerprints are available, then these administrator fingerprints may be reset by:
- in an enrolment mode of the data storage device, scanning M different fingerprints;
- verifying each of the M fingerprints against the enrolled administrator fingerprints;
- if the verification of each of the M fingerprints is successful, resetting all enrolled administrator fingerprints.

This effectively restores the factory settings of the data storage device, since the data storage device becomes inaccessible in a normal mode of operation. Any user data in the data storage device is deleted.

If both administrator and user fingerprints are available, then both the administrator fingerprints and the user fingerprints may be reset by:
- in an enrolment mode of the data storage device, scanning M different fingerprints;
- verifying each of the M fingerprints against the enrolled administrator fingerprints;
- if the verification of each of the M fingerprints is successful, resetting all enrolled administrator fingerprints and all enrolled user fingerprints.

Again, this effectively restores the factory settings of the data storage device, since the data storage device becomes inaccessible in a normal mode of operation. Any user data in the data storage device is deleted.

If both administrator and user fingerprints are available, then only the user fingerprints may be reset by scanning a combination of fingerprints containing at least one user fingerprint (so, containing one or more user fingerprints, and zero or more administrator fingerprints):
- in an enrolment mode of the data storage device, scanning Q different fingerprints (Q ≤ M+N);
- verifying each of the Q fingerprints against the enrolled administrator fingerprints and the enrolled user fingerprints;
- if the verification of each of the Q fingerprints is successful, and the verification of at least one of the Q fingerprints is successful against an enrolled user fingerprint, resetting all enrolled user fingerprints.

This makes the data storage device inaccessible for any previous user in a normal mode of operation. On the other hand, the data storage device still is accessible by the administrator fingerprints. Any user data in the data storage device may or may not be deleted.

In an embodiment of the method according to the present invention, M = 2, N = 4, P = 2, and Q = 2.

In a further embodiment of the present invention, a data storage device is provided, comprising:
- a fingerprint sensor configured to scan fingerprints to generate fingerprint bio-data;
- a bio-data storage unit configured to store the fingerprint bio-data;
- a user data storage unit (flash memory) configured to store user data;
- a data processing system configured to interface with the fingerprint sensor, the bio-data storage unit, the user data storage unit, and an external host computer system, wherein the data processing unit is configured to store and/or retrieve user data in the data storage device by:
   - enrolling administrator fingerprints by:
      - in an enrolment mode of the data storage device, scanning M (M ≥ 2) different administrator fingerprints from at least one administrator by the fingerprint sensor;
      - the data processing system generating administrator fingerprint bio-data from the scanned administrator fingerprints, and storing the administrator fingerprint bio-data in the bio-data storage unit to enrol the administrator fingerprints,
   - accessing the data storage device by:
      - in a normal operation mode of the data storage device, scanning P (2 ≤ P ≤ M) different fingerprints by the fingerprint sensor;
      - the data processing system verifying each of the P fingerprints against the enrolled administrator fingerprints;
      - if the verification of each of the P fingerprints is successful:
   - storing the user data by:
      - the data processing system receiving the user data from the external host computer system, and storing the user data in the user data storage unit, and/or
   - retrieving the user data by:
      - the data processing system reading the user data from the user data storage unit, and outputting the user data to the external host computer system.

In a further embodiment of the data storage device according to the present invention, the data processing unit is further configured to:
- enrolling user fingerprints by:
   - in an enrolment mode of the data storage device, scanning N (N ≥ 2) different user fingerprints from at least one user by the fingerprint sensor;
   - the data processing system generating user fingerprint bio-data from the scanned user fingerprints, and storing the user fingerprint bio-data to enrol the user fingerprints,
wherein, in accessing the data storage device, each of the P (2 ≤ P ≤ M+N) fingerprints is verified against the enrolled administrator fingerprints and the enrolled user fingerprints.

Further embodiments of the present invention are described in the subclaims.

The claims and advantages will be more readily appreciated as the same becomes better understood by reference to the following detailed description and considered in connection with the accompanying drawings in which like reference symbols designate like parts.
Figure 1 is a diagram of a biometrics parameters protected computer serial bus interface portable data storage device in an embodiment of the present invention.
Figure 2 is a block diagram of a data storage device in an embodiment of the present invention.

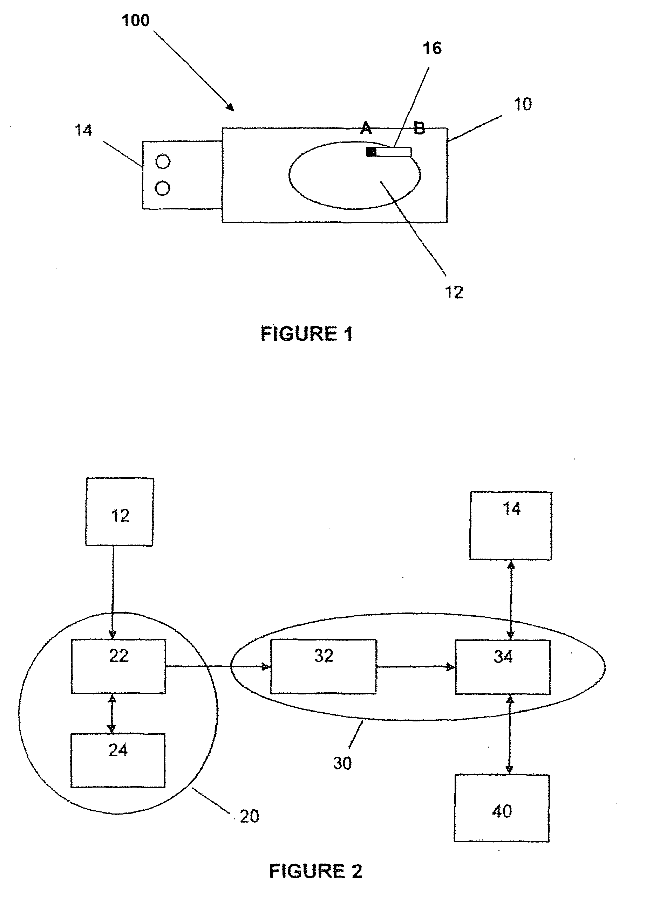

Referring particularly to Figures 1 and 2, there is shown a portable data storage device 100 which comprises a computer serial bus interface unit 14, a fingerprint sensor 12 (e.g. a capacitive or electric field sensing device) and a casing 10 which encloses a data processing system including an embedded fingerprint biometrics processing unit 20, a microcontroller and data processing unit 30 and a flash memory 40. In an embodiment of the present invention, the fingerprint sensor 12 is connected to the fingerprint biometrics processing unit 20 including the biometrics processing unit 22 and a bio-data storage unit. The biometrics processing unit 22 is connected to an access control decision unit 32 and then is connected to a data processing unit 34. A switch 16 or any other control means may be provided on the data storage device 100 to allow bringing the data storage device 100 in an enrolment mode (switch position A) or in a normal operation mode (switch position B). The computer serial bus interface unit may comprise a USB or FireWire^{™} (IEEE 1394) computer serial bus interface unit.

Referring to Figure 2, when in application, an administrator or a user of the data storage device 100 places a finger onto the fingerprint sensor 12 (which acts as a reader). The fingerprint sensor 12 scans the fingerprint, and fingerprint bio-data is sent to the fingerprint biometrics processing unit 20. In the embedded fingerprint biometrics processing unit 20, the biometrics processing unit 22 verifies the fingerprint bio-data with previously enrolled fingerprint bio-data stored (and possibly secured with an encryption key) in the bio-data storage unit 24. At least two different fingerprints must be scanned and verified successfully against previously enrolled fingerprints to gain access to the data storage device 100 to store and/or retrieve user data. If a verification is unsuccessful, access will be denied to the user data in the data storage device, or the corresponding fingerprint must be rescanned. When the verification is successful, the biometrics processing unit 22 prepares an encryption pointer which retrieves an encryption key from the bio-data storage unit 24. The encryption key retrieved may then optionally be secured in a polynomial appending process. A factory coded key or decryption key together with the encryption key trigger a data encryption/decryption process in the microcontroller and data processing unit 30. The access control decision unit 32 after being triggered, instructs the data processing unit 34 to extract information stored in the flash memory 40 and sends it to a host computer system to which the data storage device 100 is connected to via the computer serial bus interface unit 14.

Before the data storage device 100 can be used, administrator fingerprint bio-data obtained by scanning fingerprints from one or more administrators must be enrolled into the fingerprint biometrics processing unit 20. In a first enrolment, with the data storage device 100 operating in an enrolment mode by switching the switch 16 into a corresponding position A, one or more administrators, who may also be one or more users of the data storage device 100, will have at least two administrator fingerprints scanned by the fingerprint sensor 12, and the fingerprint bio-data will be processed by the biometrics processing unit 22 and then stored in the bio-data storage unit 24. In a further enrolment, with the data storage device 100 operating in an enrolment mode by switching the switch 16 into a corresponding position A, one or more users will have at least two user fingerprints scanned by the fingerprint sensor 12, and the fingerprint bio-data will be processed by the biometrics processing unit 22 and then stored in the bio-data storage unit 24.

Enrolled administrator fingerprint bio-data may be used to create an encryption key, e.g. an 128 bits key, to encrypt and decrypt user data written to, and read from, respectively, the data storage device 100.

After the enrolment of the administrator fingerprints, with the data storage device 100 operating in a normal operation mode by switching the switch 16 into a corresponding position B, access may be gained to the data storage device for storing and/or retrieving user data by successful verification of at least two different administrator fingerprints. After the enrolment of the administrator fingerprints and the user fingerprints, with the data storage device 100 operating in a normal operation mode by switching the switch 16 into a corresponding position B, access may be gained to the data storage device for storing and/or retrieving user data by successful verification of at least two different fingerprints, where all or less than all fingerprints may be administrator fingerprints, and all or less than all fingerprints may be user fingerprints.

Enrolled fingerprints may be cancelled as follows. After enrolment of the administrator fingerprints, with the data storage device 100 operating in an enrolment mode by switching the switch 16 into a corresponding position A, the administrator fingerprints may be reset by successful verification of all previously enrolled administrator fingerprints. After enrolment of the administrator fingerprints and the user fingerprints, with the data storage device 100 operating in an enrolment mode by switching the switch 16 into a corresponding position A, the administrator fingerprints and the user fingerprints may be reset by successful verification of all previously enrolled administrator fingerprints. After enrolment of the administrator fingerprints and the user fingerprints, with the data storage device 100 operating in an enrolment mode by switching the switch 16 into a corresponding position A, the user fingerprints may be reset by successful verification of at least two previously enrolled fingerprints, at least one of which is a user fingerprint. When the administrator fingerprints are reset, the user data available in the data storage device 100 is deleted. When the user fingerprints are reset, and the administrator fingerprints are not reset, the user data available in the data storage device may or may not be deleted, depending on a data processing system setting.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open ianguage). The term coupled, as used herein, is defined as connected, although not necessarily directly, and not necessarily mechanically.

While the present invention has been described by means of specific embodiment, it will be understood that modifications may be made without departing from the scope of the invention, which is not to be considered as limited by the description of the invention set forth in the specification, but rather as defined by the following claims.

## Claims

1. A method of storing and/or retrieving user data in a secure data storage device, the method comprising:
• enrolling administrator fingerprints by:
- in an enrolment mode of the data storage device, scanning M different administrator fingerprints from at least one administrator (M ≥ 2);
- generating administrator fingerprint bio-data from the scanned administrator fingerprints; and
- storing the administrator fingerprint bio-data to enrol the administrator fingerprints,
• accessing the data storage device by:
- in a normal operation mode of the data storage device, scanning P different fingerprints (2 ≤ P ≤ M);
- verifying each of the P fingerprints against the enrolled administrator fingerprints;
- if the verification of each of the P fingerprints is successful:
• storing the user data by:
- receiving the user data; and
- storing the user data in the data storage device, and/or
• retrieving the user data by:
- reading the user data in the data storage device; and
- outputting the user data from the data storage device.

2. The method according to claim 1, further comprising:
• enrolling user fingerprints by:
- in an enrolment mode of the data storage device, scanning N different user fingerprints from at least one user (N ≥ 2);
- generating user fingerprint bio-data from the scanned user fingerprints; and
- storing the user fingerprint bio-data to enrol the user fingerprints,
wherein, in accessing the data storage device, each of the P fingerprints is verified against the enrolled administrator fingerprints and the enrolled user fingerprints (2 ≤ P ≤ M+N).

3. The method according to claim 1, further comprising:
• resetting fingerprints by:
- in an enrolment mode of the data storage device, scanning M different fingerprints;
- verifying each of the M fingerprints against the enrolled administrator fingerprints;
- if the verification of each of the M fingerprints is successful, resetting all enrolled administrator fingerprints.

4. The method according to claim 2, further comprising:
• resetting fingerprints by:
- in an enrolment mode of the data storage device, scanning M different fingerprints;
- verifying each of the M fingerprints against the enrolled administrator fingerprints;
- if the verification of each of the M fingerprints is successful, resetting all enrolled administrator fingerprints and all enrolled user fingerprints.

5. The method according to claim 2, further comprising:
• resetting fingerprints by:
- in an enrolment mode of the data storage device, scanning Q different fingerprints (Q ≤ M+N);
- verifying each of the Q fingerprints against the enrolled administrator fingerprints and the enroiied user fingerprints;
- if the verification of each of the Q fingerprints is successful, and the verification of at least one of the Q fingerprints is successful against an enrolled user fingerprint, resetting all enrolled user fingerprints.

6. The method according to any of claims 1-5, wherein M = 2.

7. The method according to any of claims 2, 4 or 5, wherein N = 2 or 4.

8. The method according to any of claims 1-7, wherein P = 2.

9. The method according to any of claims 1-8, wherein Q = 2.

10. The method according to any of claims 1-9, wherein if the verification of at least three subsequent fingerprints is unsuccessful, access is denied to the data storage device.

11. The method according to any of claims 1-10, further comprising:
• storing the user data by:
- receiving the user data;
- encrypting the user data to produce encrypted user data; and
- storing the encrypted user data in the data storage device, and/or
• retrieving the user data by:
- reading the encrypted user data in the data storage device;
- decrypting the encrypted user data to produce the user data; and
- outputting the user data from the data storage device.

12. A data storage device, comprising:
- a fingerprint sensor configured to scan fingerprints to generate fingerprint bio-data;
- a bio-data storage unit configured to store the fingerprint bio-data;
- a user data storage unit configured to store user data;
- a data processing system configured to interface with the fingerprint sensor, the bio-data storage unit, the user data storage unit, and an external host computer system, wherein the data processing unit is configured to store and/or retrieve user data in the data storage device by:
• enrolling administrator fingerprints by:
- in an enrolment mode of the data storage device, scanning M (M ≥ 2) different administrator fingerprints from at least one administrator by the fingerprint sensor;
- the data processing system generating administrator fingerprint bio-data from the scanned administrator fingerprints, and storing the administrator fingerprint bio-data in the bio-data storage unit to enrol the administrator fingerprints,
• accessing the data storage device by:
- in a normal operation mode of the data storage device, scanning P (2 ≤ P ≤ M) different fingerprints by the fingerprint sensor;
- the data processing system verifying each of the P fingerprints against the enrolled administrator fingerprints;
- if the verification of each of the P fingerprints is successful:
• storing the user data by:
- the data processing system receiving the user data from the external host computer system, and storing the user data in the user data storage unit, and/or
• retrieving the user data by:
- the data processing system reading the user data from the user data storage unit, and outputting the user data to the external host computer system.

13. The data storage device according to claim 12, wherein the data processing unit is further configured to:
• enrolling user fingerprints by:
- in an enrolment mode of the data storage device, scanning N (N ≥ 2) different user fingerprints from at least one user by the fingerprint sensor;
- the data processing system generating user fingerprint bio-data from the scanned user fingerprints, and storing the user fingerprint bio-data to enrol the user fingerprints,
wherein, in accessing the data storage device, each of the P (2 ≤ P ≤ M+N) fingerprints is verified against the enrolled administrator fingerprints and the enrolled user fingerprints.

14. The data storage device according to claim 12 or 13, wherein said fingerprint sensor is a capacitive or electric field sensing device.

15. The data storage device according to any of claims 12-14, further comprising a computer serial bus interface unit coupled to the data processing system for connecting the data storage device to the host computer system.

16. The data storage device of claim 15, wherein the computer serial bus interface unit comprises a USB or FireWire^{™} (IEEE1394) computer serial bus interface unit.
